# EUROPEAN PATENT SPECIFICATION

(11) **EP 3 592 796 B1**
(45) Date of publication and mention of the grant of the patent: **21.04.2021**
(21) Application number: 18709197.0
(22) Date of filing: 06.02.2018
(51) Int. Cl.: C08G 59/06, C08G 59/50, C08G 59/40

(54) **STABLE EPOXY/INTERNAL MOLD RELEASE AGENT BLENDS FOR THE MANUFACTURE OF COMPOSITE ARTICLES**
STABILE EPOXID-/INNENFORMTRENNMITTELMISCHUNGEN FÜR DIE HERSTELLUNG VON VERBUNDARTIKELN
MÉLANGES D'AGENTS DE DÉMOULAGE INTERNE/ÉPOXYDE STABLES DESTINÉS À LA FABRICATION D'ARTICLES COMPOSITES

(30) Priority: 09.03.2017 US 201762469185 P
(43) Date of publication of application: 15.01.2020
(73) Proprietor: Dow Global Technologies LLC, Midland, MI 48674 (US)
(72) Inventor: TSOUTSOURA, Aikaterini, 8003 Zuerich (CH); MORLEY, Timothy A., 8807 Freienbach (CH); KOENIGER, Rainer, 8807 Freienbach (CH); LOTTI, Luca, 8807 Freienbach (CH); JELIC, Nebojsa, 8807 Freienbach (CH); SIKMAN, Zeljko, Midland Michigan 48674 (US)
(74) Representative: Beck Greener LLP
(86) International application number: PCT/US2018/017001
(87) International publication number: WO 2018/164794

(56) References cited:
- WO-A1-2012/177392
- WO-A1-2015/142771
- WO-A1-2016/209864
- WO-A1-2018/034856

## Description

### FIELD OF THE INVENTION

The invention relates to epoxy compositions using internal mold release agents and methods for making cured epoxy resins from such compositions.

### BACKGROUND OF THE INVENTION

In recent years, the demand in the automotive industry has transitioned towards the use of composite materials due to stringent emissions targets. Carbon or glass fiber composite materials offer reduced vehicle weight thus meeting emission targets and resistance to corrosion.

Epoxy resins are used as the resin binder phase in composites. These composites are made in molding processes such as resin transfer molding (RTM) and liquid compression molding (LCM) processes, in which an epoxy resin composition is cured in a mold in the presence of reinforcing fibers.

Low-cost production of these composites requires that the processes operate with a short cycle time. The cycle time is the time required to produce a part and prepare the equipment to produce the next succeeding one.

A significant component of cycle time is the time needed to remove the finished part from the mold and prepare the mold for the succeeding shot. Epoxy resins are powerful adhesives and therefore tend to stick to the internal mold surfaces, making the demolding step difficult and slow.

Mold release agents are used to combat this problem. There are two main classes of mold release agents. External mold release agents are applied to the interior mold surfaces at the beginning of a production run, before the mold is filled the first time, and periodically thereafter. External mold release agents can be very effective, but are disadvantaged because they usually need to be applied manually. Production rates are slowed because the manufacturing process must be interrupted each time the internal mold release is applied.

In contrast to external mold release agents, internal mold release agents (IMRs) are carried into the mold when the mold is filled. Therefore, they do not need to be applied manually or in a separate step in the manufacturing process. IMRs often are used in conjunction with external mold release agents. In those cases, the IMRs allow the manufacturer to apply the external mold release agent less frequently, thereby reducing the cycle time for each cycle in which the step of applying the external mold release agent is omitted. Sometimes, it is possible to completely eliminate the need to apply the external mold release agent.

A second important way to reduce cycle time is to increase the reactivity of the epoxy resin system, so curing takes place more rapidly. For this reason, the epoxy resin is frequently preheated, which has the dual benefits of reducing its viscosity and speeding the cure. Frequently, the epoxy resin is kept in a heated tank, from which it is fed to a mixhead where it is mixed with a hardener (also frequently preheated) and then injected into the mold or sprayed onto a fiber preform that is then introduced into the mold.

Certain ethoxylated compounds are known to be effective IMRs for epoxy resin compositions. These materials are polyethers formed by polymerizing ethylene oxide onto a hydrophobic initiator compound such as a fatty acid, a fatty alcohol or an alkyl phenol. These ethoxylated IMRs have a significant drawback in that they are reactive with epoxy resins. These reactions lead to a loss of effectiveness of the IMR, particulate formation and degraded thermal and/or mechanical properties in the cured resin. The problem is especially acute when the epoxy resin is preheated, as the higher temperatures accelerate the reaction between the ethoxylated IMR and the epoxy resin. In a production setting, the epoxy resin/IMR mixture may be maintained at elevated temperatures for hours or even days before being dispensed. The prolonged time at high temperature favors the unwanted reaction.

Because of these problems, ethoxylated IMRs are generally not combined with the epoxy resin in advance of the molding process, but instead are mixed with the other components just before they are injected into the mold. The formulations comprised of the resin, the hardener and the internal mold release agent (IMR) are injected in three separate streams by a high pressure mixing and metering machine. The IMR is added at a low level often around 2 weight % versus the epoxy resin and is critical for the attainment of fast cycle times. Fast demold times after the curing step are a prerequisite for fast cycles. Due to the high delta in amount of material required versus the resin stream (100: 2 pbw respectively) the injection equipment can struggle to meter an accurate level of release agent throughout the injection process. This can impact not only the demoldability of the final part but also lead to differences in mechanical, thermal and adhesion performance due to the strong influence of the release agent even at low levels in the formulation

WO2016/209864 discloses a curable epoxy resin system, comprising 1) an epoxy resin component containing one or more epoxy resins, wherein at least 80% by weight of the epoxy resins is one or more polyglycidyl ethers of a polyphenol that has an epoxy equivalent weight of up to about 250; 2) an amine hardener, wherein the amine hardener is a polyethylene tetraamine mixture containing at least 95% by weight polyethylene tetraamines, the mixture containing at least 40% by weight linear triethylene tetraamine, wherein at least 0.8 epoxy equivalents are provided to the reaction mixture by the epoxy resin component per amine hydrogen equivalent provided by the amine hardener; and 3) 0.01 to 0.5 moles of triethylene diamine per mole of primary and/or secondary amine compounds in the amine hardener, the triethylene diamine being present in the epoxy resin component, the amine hardener, or both; wherein the resin system further comprises an internal mold release agent mixed with a dye solution. The epoxy resin may contain, for example, no more than 3%, preferably no more than 2% and still more preferably no more than 1% by weight of monohydrolyzed resin species.

As a result, there is a need for an epoxy system having an internal mold release agent that is stable when mixed into the resin stream in both the resin transfer molding and liquid compression molding enabling the IMR to be evenly distributed throughout the injection process.

### SUMMARY OF THE INVENTION

In accordance with a first aspect of the invention, there is provided a heat stable epoxy resin composition comprising an epoxy functionalized resin, a hardener and an internal mold release agent, wherein the epoxy resin composition remains heat and storage stable in the presence of the internal mold release agent for extended periods without curing. Said epoxy functionalized resin has a monohydrolyzed resin content of at least 10% and said internal mold release agent comprises a fatty acid ethoxylate.

The invention uses epoxy functionalized resins with a higher monohydrolyzed resin (MHR) content that are stable with an internal mold release agent primarily composed of fatty acid ethoxylates. Standard epoxy resins with low level of MHR were tested and it was found that these do not afford this level of stability while premixed with internal mold release agents resulting in particle formation already after one day under stirring. The fatty acid ethoxylate typically has a fatty acid chain length ranging from about 1 carbon atom to 100 carbon atoms, preferably from about 5 carbon atoms to 50 carbon atoms, and more preferably from 5 carbon atoms to 20 carbon atoms.

The invention is especially useful when the epoxy functionalized resin and the IMR need to be injected as one premixed stream for the manufacture of carbon fiber composites via the RTM or liquid compression molding processes.

### DETAILED DESCRIPTION OF THE PREFERRED EMBODIMENTS

The invention is an epoxy resin which is stable in the presence of internal mold release agents. The composition generally comprises an epoxy functionalized resin, a hardener, and an internal mold release agent.

### A. EPOXY FUNCTIONALIZED RESIN

The epoxy resin may be any one or more epoxy-containing compounds having a number average of at least 1.5, preferably at least 1.8, epoxide groups per molecule, and a number average epoxy equivalent weight of up to 1000. The number average epoxy equivalent weight preferably is up to 500, more preferably is up to 250 and still more preferably is up to 225. The epoxy resin preferably has up to eight epoxide groups and more preferably has a number average of 1.8 to 4, especially 1.8 to 3 and most preferably 1.8 to 2.5, epoxide groups per molecule. The epoxy resin (or mixture of epoxy resins, if a mixture is used) is preferably a liquid at room temperature, to facilitate easy mixing with other components.

Among the useful epoxy resins include, for example, polyglycidyl ethers of polyphenolic compounds. One type of polyphenolic compound is a diphenol (*i.e.,* has exactly two aromatic hydroxyl groups) such as, for example, resorcinol, catechol, hydroquinone, biphenol, bisphenol A, bisphenol AP (1,1-bis(4-hydroxylphenyl)-1-phenyl ethane), bisphenol F, bisphenol K, tetramethylbiphenol, or mixtures of two or more thereof. The polyglycidyl ether of such a diphenol may be advanced, provided that the epoxy equivalent weight is about 1000 or less, preferably about 250 or less and more preferably about 225 or less.

Other useful polyglycidyl ethers of polyphenols include epoxy novolac resins. The epoxy Novolac® resin may contain, for example, 2 to 10, preferably 3 to 6, more preferably 3 to 5 epoxide groups per molecule. Among the suitable epoxy novolac resins are those having the general structure of FORMULA I: 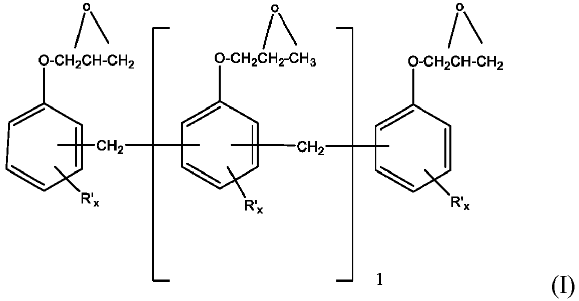 in which 1 is 0 to 8, preferably 1 to 4, more preferably 1 to 3, each R' is independently alkyl or inertly substituted alkyl, and each x is independently 0 to 4, preferably 0 to 2 and more preferably 0 to 1. R' is preferably methyl if present.

Other useful polyglycidyl ethers of polyphenol compounds include, for example, tris(glycidyloxyphenyl)methane, tetrakis(glycidyloxyphenyl)ethane and the like.

Still other useful epoxy resins include polyglycidyl ethers of aliphatic polyols, in which the epoxy equivalent weight is up to 1000, preferably up to 500, more preferably up to 250, and especially up to 200. These may contain 2 to 6 epoxy groups per molecule. The polyols may be, for example, alkylene glycols and polyalkylene glycols such as ethylene glycol, diethylene glycol, tripropylene glycol, 1,2-propane diol, dipropylene glycol, tripropylene glycol and the like as well as higher functionality polyols such as glycerin, trimethylolpropane, trimethylolethane, pentaerythritol, sorbitol and the like. These preferably are used together with an aromatic epoxy resin such as a diglycidyl ether of a biphenol or an epoxy novolac resin.

Still other useful epoxy resins include tetraglycidyl diaminodiphenylmethane; oxazolidone-containing compounds as described in U. S. Patent No. 5,112,932; cycloaliphatic epoxides; and advanced epoxy-isocyanate copolymers such as those sold commercially as D.E.R.™ 592, D.E.R.™ 6508 and D.E.R. TM 6510 (Olin Corporation) as well as those epoxy resins described in WO 2008/140906.

According to the invention, the epoxy resin component contains at least 10 % by weight of monohydrolyzed resin species. Monohydrolyzed resin species are α-glycol compounds formed by the addition of a molecule of water to an epoxide group.

A preferred epoxy resin contains 80 to 100 weight percent of a polyglycidyl ether of a polyphenol, having a number average of 1.8 to 3, especially 1.8 to 2.5 epoxide groups per molecule, and a number average epoxy equivalent weight of 125 to 225, especially 150 to 200. An especially preferred epoxy resin contains 80 to 100 weight percent of a diglycidyl ether of a bisphenol having an epoxy equivalent weight of 170 to 200 and a number average of 1.8 to 2.5 epoxide groups per molecule.

The epoxy functionalized resin useful in this invention has a higher monohydrolyzed resin content. The resin according to the invention contains, based upon the total weight of polyglycidyl ether of a polyphenol resin, at least about 10 wt % monohydrolyzed resin content.

Monohydrolyzed resins are α-glycol compounds formed by the addition of a molecule of water to an epoxide group. The presence of significant quantities of monohydrolyzed content tends to increase the viscosity of the epoxy component, and in turn that of the epoxy resin/hardener mixture. In addition, it is believed that these species may contribute to a reduction in open time. Generally, the concentration of epoxy may range from 50 wt % to 99.9 wt % of the composition.

### B. HARDENER

The epoxy resin mixture of the invention can be formed into a curable epoxy resin composition by mixing it with a hardener, which is then cured. Because of its mold release properties, the epoxy resin mixture is particularly useful for making molded epoxy resins by curing the mixture in a mold.

The epoxy hardener is a compound or mixture of compounds having epoxy-reactive groups. The hardener may be, for example, a compound having two or more amine hydrogens, an anhydride compound, a di- or polycarboxylic acid, a thiol compound having two or more thiol groups, a phenolic compound having two or more phenolic groups, and the like. If desired, the epoxy hardener may be a latent or thermally activated type that melts or otherwise becomes reactive only when heated to an elevated temperature such as at least 80° C. Such latent or thermally activated hardeners are preferred for formulating a one-component curable epoxy resin composition.

Examples of suitable hardeners include phenolic hardeners such as D.E.H. 80, D.E.H. 81, D.E.H. 82, D.E.H. 84, D.E.H. 85 and D.E.H. 87 hardeners, from Olin Corporation; amine-epoxy adducts such as D.E.H. 4043, D.E.H. 4129, D.E.H. 4353, D.E.H. 4354, D.E.H. 444, D.E.H. 445, D.E.H. 4702, D.E.H. 4712, D.E.H. 4723, D.E.H. 487, D.E.H. 488, D.E.H. 489, D.E.H. 52, D.E.H. 530, D.E.H. 534, D.E.H. 536, D.E.H. 554, D.E.H. 581, D.E.H. 595 and D.E.H. 4060, from Olin Corporation; modified polyamide curing agents such as D.E.H. 1504, D.E.H. 545 and D.E.H. 1450, from Olin Corporation; Mannich bases and modified amines such as D.E.H. 613, D.E.H. 614, D.E.H. 615, D.E.H. 616, D.E.H. 619, D.E.H. 622, and D.E.H. 630, from Olin Corporation; guanidines and substituted guanidines including dicyandiamine; melamine resins, aromatic amines such aniline, toluene diamine, diphenylmethanediamine, diethyltoluenediamine; urea compounds such as p-chlorophenyl-N,N-dimethylurea, 3-phenyl-1,1-dimethylurea, 3,4-dichlorophenyl-N,N-dimethylurea; imidazole compounds such as 2-ethyl-2-methylimidazole, benzimidazole and N-butylimidazole; polythiol curing agents such as mercaptoacetate and mercaptopropionate esters of low molecular weight polyols having 2 to 8, preferably 2 to 4 hydroxyl groups and an equivalent weight of up to about 75, in which all of the hydroxyl groups are esterified with the mercaptoacetate and alkylene dithiols such as 1,2-ethane dithiol, 1,2-propane dithiol, 1,3-propanedithiol, 1,4-butane dithiol, 1,6-hexane dithiol and the like, trithiols such as 1,2,3-trimercaptopropane, 1,2,3-tri(mercaptomethyl)propane, 1,2,3-tri(mercaptoethyl)ethane, (2,3-bis(2-mercaptoethyl)thio)1-propanethiol; aminocyclohexanealkylamines such as cyclohexanemethanamine, 1,8-diamino-pmenthane and 5-amino-1,3,3-trimethylcyclohexanemethylamine (isophorone diamine); linear or branched polyalkylene polyamines, N',N'-bis(2-aminoethyl)ethane-1,2-diamine, 2-methylpentane-1,5-diamine; other amine curing agents including gem-di-(cyclohexanylamino)-substituted alkanes, diaminocyclohexane, aminoethylpiperazine and bis((2-piperazine-1-yl)ethyl)amine; aminoalcohols including, for example, ethanolamine, diethanolamine, 1-amino-2-propanol, diisopropanolamine, anhydride hardeners such as styrene-maleic anhydride copolymers, nadic methyl anhydride, hexahydrophthalic anhydride, methylhexahydrophthalic anhydride, trimellitic anhydride, dodecyl succinic anhydride, phthalic anhydride, methyltetrahydrophthalic anhydride and tetrahydrophthalic anhydride and isocyanate hardeners such as toluene diisocyanate, methylene diphenyldiisocyanate, hydrogenated toluene diisocyanate, hydrogenated methylene diphenyldiisocyanate, polymethylene polyphenylene polyisocyanates (and mixtures thereof with methylene diphenyldiisocyanate, commonly known as "polymeric MDI"), isophorone diisocyanate, and the like. Still other additional hardeners include hardeners described in WO 2008/140906.

In some embodiments, the hardener includes at least one polyalkylenepolyamine. The polyalkylene polyamine may have three or more amine hydrogens per molecule, up to as many as 10 or more. The alkylene groups each may contain from 2 to 8 carbons, preferably from 2 to 6 carbons, and can be linear or branched. The polyalkylene polyamine may have an amine hydrogen equivalent weight as low as about 20 to as much as 50. The molecular weight of the polyalkylene polyamine may be up to 500, preferably up to 200. The polyalkylene polyamine may contain one or more tertiary amino groups. The polyalkylene polyamine includes, for example, diethylene triamine, triethylene diamine, tetraethylenepentamine, higher polyethylene polyamines, N',N'-bis(2-aminoethyl)ethane-1,2-diamine, 2-methylpentane-1,5-diamine and the like. A hardener that includes a polyalkylene polyamine in some embodiments contains less that 0.5% by weight of aminoethylethanolamine.

Enough of the hardener is provided to cure the epoxy resin. The amount of hardener in specific embodiments may be less than a stoichiometric amount (*i.e.,* the amount needed to consume all of the epoxy groups of the epoxy resin), such as at least 50%, at least 75% or at least 90% of the stoichiometric amount. A stoichiometric amount of hardener may be needed, or an excess of hardener over the stoichiometric amount, such as at least 5%, at least 10% or at least 20% more than the stoichiometric amount may be used. It is usually unnecessary to use more than 50% more than or more than 25% more than the stoichiometric amount.

### C. MOLD RELEASE AGENT

The composition of the invention also comprises an internal mold release agent (or "IMR") comprising a fatty acid ethoxylate. Useful mold release agents in accordance with the invention comprise those agents, which facilitate cycle times and are stable in the presence of the epoxy functionalized resin in a manner consistent with the invention.

One class of mold release agents useful in the invention are alkoxylated hydrophobes.

The alkoxylated hydrophobe includes a hydrophobic portion (the "hydrophobe") bonded to a poly(alkylene oxide chain). The poly(alkylene oxide) chain is bonded to the hydrophobe through a linking group.

The alkoxylated hydrophone in some embodiments corresponds to the structure of FORMULA II:

A-X-B-OR (II)

wherein A represents the hydrophobe, X represents a linking group, B represents the poly(alkylene oxide) chain and R represents hydrogen or a capping group having 1 to 8 carbon atoms. When R is hydrogen, at least 50% of the oxygen atoms connecting R to B are bonded to a secondary carbon atom on the B group. The OR group in such a case is a terminal secondary hydroxyl. The X group may be, for example, an ether oxygen, an amine nitrogen, an ester group, a urethane group, a urea group, a sulfur atom, and the like.

The hydrophobe includes an unsubstituted aliphatic hydrocarbyl group of at least 10 carbon atoms. It may contain at least up to 24 carbon atoms, and preferably contains 10 to 18 carbon atoms. By "unsubstituted", it is meant that the aliphatic hydrocarbyl group contains no heteroatom-containing substituents. It may contain hydrocarbyl substituents, *i.e.,* substituents that include only hydrogen and carbon atoms. Examples of hydrocarbyl substituents include aryl groups such as phenyl, alkyl groups, and alkenyl groups. The unsubstituted aliphatic hydrocarbyl group may be saturated or unsaturated. If unsaturated, it may contain one or more carbon-carbon double bonds or carbon-carbon triple bonds along the length of the chain.

In some embodiments, the hydrophobe is a straight-chain alkyl group having 10 to 24 carbon (C) atoms, especially 10 to 18 carbon (C) atoms; a straight-chain mono-, di- or trialkene having 10 to 24, especially 10 to 18 carbon ( C) atoms; or an alkyl- or alkenyl-substituted phenyl in which the alkyl or alkenyl group is a straight-chain group having 10 to 24, especially 10 to 18 carbon (C) atoms.

In some embodiments, the alkoxylated hydrophobe is produced by alkoxylating a fatty acid having 10 to 24, especially 10 to 18 carbon (C) atoms, by alkoxylating a fatty alcohol having 10 to 24, especially 10 to 18 carbon (C) atoms, or an alkyl- or alkenyl phenol in which the alkyl or alkenyl group contains 10 to 24, especially 10 to 18 carbon (C) atoms.

The poly(alkylene oxide) chain may contain at least 1, at least 5, at least 8, at least 10 or at least 12 oxyalkylene units. It may contain, for example, up to 80, up to 50, up to 35 or up to 25 oxyalkylene units. The oxyalkylene units may contain, for example 2 to 4 carbon atoms and may be, for example, oxyethylene units such as are formed by polymerizing ethylene oxide, 2-methyloxyethylene units such as are formed by polymerizing 1,2-propylene oxide, 2-ethyloxyethylene units such as are formed by polymerizing 1,2-butylene oxide, n-propyleneoxy units such as are formed by polymerizing 1,3-propylene oxide, 1,2- dimethyloxyethylene oxide units such as are formed by polymerizing 2,3-butylene oxide and/or n-butyleneoxy units such as are formed by polymerizing tetrahydrofuran. Mixtures of two or more of such oxyalkylene units may be present.

The poly(alkylene oxide) chain may be formed by polymerizing one or more alkylene oxides. The polymerization preferably is performed in the presence of an initiator compound that contains the hydrophobe and a functional group that is susceptible to alkoxylation, such as a hydroxyl, carboxylic acid, primary amino, secondary amino or thiol group.

In some embodiments, the poly(alkylene oxide) chain can be formed by polymerizing any of ethylene oxide, 1,2-propylene oxide, 1,3-propylene oxide, 1,2-butylene oxide or tetrahydrofuran by itself; by the random copolymerization of any two or more thereof; or by the sequential polymerization of any two or more thereof

In one embodiment, the poly(alkylene oxide) chain is a poly(1,2-propylene oxide). An alkoxylated hydrophobe made by polymerizing poly(1,2-propylene oxide) will contain mainly secondary hydroxyl groups, unless the hydroxyl groups are capped. Secondary hydroxyl groups are bonded to a carbon atom which itself is bonded to two other carbon atoms. Primary hydroxyl groups are bonded to a methylene (-CH2-).

In a second embodiment, the poly(alkylene oxide) chain is a block copolymer having an internal poly(ethylene oxide) block and a terminal poly(1,2-propylene oxide) block. Such a block copolymer is conveniently formed by polymerizing ethylene oxide and 1,2-propylene oxide in sequence. Unless capped, the terminal poly(1,2-propylene oxide) block produces mostly secondary hydroxyl groups at the end of the poly(alkylene oxide) chains.

In a third embodiment, the poly(alkylene oxide) chain is a block copolymer having an internal poly(ethylene oxide) block and a terminal poly(1,2-butylene oxide) block. Such a block copolymer is conveniently formed by polymerizing ethylene oxide and 1,2-butylene oxide in sequence. Unless capped, the terminal poly(1,2-butylene oxide) block produces mostly secondary hydroxyl groups at the end of the poly(alkylene oxide) chain.

In a fourth embodiment, the poly(alkylene oxide) chain is a block copolymer having a poly(1,2-propylene oxide) block and a poly(1,2-butylene oxide) block. These blocks may be arranged in any order, by polymerizing the respective oxides in the desired sequence. Unless capped, the terminal block produces mostly secondary hydroxyl groups at the end of the poly(alkylene oxide) chain.

In a fifth embodiment, the poly(alkylene oxide) chain is a random copolymer of 1,2-propylene oxide and 1,2-butylene oxide. Unless capped, the random copolymerization produces mostly secondary hydroxyl groups at the end of the poly(alkylene oxide) chain.

At least 50%, at least 75%, at least 85% or at least 90%, up to 100%, of the hydroxyl groups of the alkoxylated hydrophobe may be secondary hydroxyl groups.

The terminal poly(alkylene oxide) chain may be capped by reaction with a capping group that contains 1 to 8 carbon atoms. The capping group may be bonded to the poly(alkylene) oxide chain through, for example, an ether group, a urethane group, an ester group, a urea group or an amino group. The capping group may include, for example, an alkyl group of 1 to 8 carbon atoms, a benzyl group or other phenylsubstituted alkyl group, an aryl group, and the like.

Commercially available materials that are useful as the alkoxylated hydrophobe include nonionic surfactants such as Dowfax® 25A414, Dowfax® 20B102, Dowfax®20A64, Dowfax®20A612, Dowfax®25A59, UCON™ OSP-18, UCON™ OSP-46, UCON™ OSP-68 and UCON™ OSP-220 surfactants, all sold by The Dow Chemical Company. The Dowfax® surfactants are prepared by sequentially adding ethylene oxide and then either 1,2-propylene oxide or 1,2-butylene oxide to a fatty alcohol having 12 to 18 carbon atoms. They have an internal poly(ethylene oxide) block and a terminal poly(1,2-propylene oxide) or poly(1,2-butylene oxide) block; all have at least 85% secondary hydroxyl groups. The UCON™ surfactants are prepared by simultaneously adding 1,2-propylene oxide and 1,2-butylene oxide to dodecanol so that the oxides are randomly or pseudo-randomly distributed as oxyalkylene units along the polymer backbone. All have at least 85% secondary hydroxyl groups. The concentration of internal mold release agent may range from 0.1 wt % to 50 wt %.

### D. CATALYSTS

The curing reaction may be performed in the presence of a catalyst for the epoxy curing reaction. In some embodiments, the catalyst includes a tertiary amine catalyst. It contains at least one tertiary amine group and is devoid of groups that are reactive towards epoxy groups. Suitable tertiary amine catalysts include tertiary aminophenol compounds, benzyl tertiary amine compounds, imidazole compounds, or mixtures of any two or more thereof.

Tertiaryaminophenol compounds contain one or more phenolic groups and one or more tertiary amino groups. Examples of tertiary aminophenol compounds include mono-, bis- and tris(dimethylaminomethyl)phenol, as well as mixtures of two or more of these.

Benzyl tertiary amine compounds are compounds having a tertiary nitrogen atom, in which at least one of the substituents on the tertiary nitrogen atom is a benzyl or substituted benzyl group. An example of a useful benzyl tertiary amine compound is N,N-dimethyl benzylamine.

Imidazole compounds contain one or more imidazole groups. Examples of imidazole compounds include, for example, imidazole, 2-methylimidazole, 2-ethyl-4-methylimidazole, 2-undecylimidazole, 2-heptadecylimidazole, 2-phenylimidazole, 2-phenyl-4-methylimidazole, 1-benzyl-2-methylimidazole, 2-ethylimidazole, 2-isopropylimidazole, 2-phenyl-4-benzylimidazole, 1-cyanoethyl-2-undecylimidazole, 1-cyanoethyl-2-ethyl-4-methylimidazole, 1-cyanoethyl-2-undecylimidazole, 1-cyanoethyl-2-isopropylimidazole, 1-cyanoethyl-2-phenylimidazole, 2,4-diamino-6-[2'-methylimidazolyl-(1)']ethyl-s-triazine, 2,4-diamino-6-[2'-ethylimidazolyl-(1)']ethyl-s-triazine, 2,4-diamino-6-[2'-undecylimidazolyl-(1)']ethyl-s-triazine, 2-methylimidazolium-isocyanuric acid adduct, 2-phenylimidazolium-isocyanuric acid adduct, 1-aminoethyl-2-methylimidazole, 2-phenyl-4,5-dihydroxylmethylimidazole, 2-phenyl-4-methyl-5-hydroxymethylimidazole, 2-phenyl-4-benzyl-5-hydroxymethylimidazole, and compounds containing two or more imidazole rings obtained by dehydrating any of the foregoing imidazole compounds or condensing them with formaldehyde.

Other catalysts include those described in, for example, U.S. Patent Nos. 3,306,872, 3,341,580, 3,379,684, 3,477,990, 3,547,881, 3,637,590, 3,843,605, 3,948,855, 3,956,237, 4,048,141, 4,093,650, 4,131,633, 4,132,706, 4,171,420, 4,177,216, 4,302,574, 4,320,222, 4,358,578, 4,366,295, and 4,389,520, and WO 2008/140906, all incorporated herein by reference.

The catalyst is present in a catalytically effective amount. A suitable amount is typically from about 0.1 to about 10 parts by weight of catalyst(s) per 100 parts by weight of epoxy resin(s). A preferred amount is from 1 to 5 parts of catalyst(s) per 100 parts by weight of epoxy resin(s).

The catalyst may be blended into the epoxy resin mixture or, more preferably, into the hardener before the epoxy resin mixture and hardener are brought together to form the curable epoxy resin composition.

### E. ADJUVANTS

The curable epoxy resin composition may be cured in the presence of various optional ingredients, if desired. It is often convenient to incorporate these optional ingredients, if used, into either the epoxy resin mixture or the hardener, or both, before forming and curing the curable epoxy resin composition.

Other optional components that can be present include solvents or reactive diluents, pigments, antioxidants, preservatives, impact modifiers, non-fibrous particulate fillers including micron- and nano-particles, wetting agents and the like.

The solvent is a material in which the epoxy resin, or hardener, or both, are soluble. The solvent is not reactive with the epoxy resin(s) or the hardener under the conditions of the polymerization reaction. The solvent (or mixture of solvents, if a mixture is used) preferably has a boiling temperature that is at least equal to and preferably higher than the curing temperature. Suitable solvents include, for example, glycol ethers such as ethylene glycol methyl ether and propylene glycol monomethyl ether; glycol ether esters such as ethylene glycol monomethyl ether acetate and propylene glycol monomethyl ether acetate; poly(ethylene oxide) ethers and poly(propylene oxide) ethers; polyethylene oxide ether esters and polypropylene oxide ether esters; amides such as N,N-dimethylformamide; aromatic hydrocarbons such as toluene and xylene; aliphatic hydrocarbons; cyclic ethers; halogenated hydrocarbons; and mixtures of any two or more thereof. It is preferred to omit a solvent. If used, the solvent may constitute up to 75% of the weight of the curable epoxy resin composition (not including the weight of any fillers or reinforcing fiber), more preferably up to 30% of the weight thereof. Even more preferably the curable epoxy resin composition contains no more than 5% by weight of a solvent and most preferably contains less than 1% by weight of a solvent.

Suitable impact modifiers include natural or synthetic polymers having a Tg of lower than -40°C. These include natural rubber, styrene-butadiene rubbers, polybutadiene rubbers, isoprene rubbers, core-shell rubbers, butylene oxide-ethylene oxide block copolymers, and the like. The rubbers are preferably present in the form of small particles that become dispersed in the polymer phase of the composite. The rubber particles can be dispersed within the epoxy resin or hardener and preheated together with the epoxy resin component or hardener prior to mixing them together.

Suitable particulate fillers have an aspect ratio of less than 5, preferably less than 2, and do not melt or thermally degrade under the conditions of the curing reaction. Suitable fillers include, for example, glass flakes, aramid particles, carbon black, carbon nanotubes, various clays such as montmorillonite, and other mineral fillers such as wollastonite, talc, mica, titanium dioxide, barium sulfate, calcium carbonate, calcium silicate, flint powder, carborundum, molybdenum silicate, sand, and the like. Some fillers are somewhat electroconductive, and their presence in the composite can increase the electroconductivity of the composite. In some applications, notably automotive applications, it is preferred that the composite is sufficiently electroconductive that coatings can be applied to the composite using so-called "e-coat" methods, in which an electrical charge is applied to the composite and the coating becomes electrostatically attracted to the composite. Conductive fillers of this type include metal particles (such as aluminum and copper), carbon black, carbon nanotubes, graphite and the like.

Thermosets are formed from the curable epoxy resin composition of the invention by mixing the epoxy resin mixture with the hardener, and allowing the resulting curable epoxy resin composition to cure. Either or both of the epoxy resin mixture and hardener can be preheated if desired before they are mixed with each other. It is generally preferred to heat the curable epoxy resin composition to an elevated temperature, such as from 60 to 220°C, to accelerate the cure.

Unless otherwise provided, the invention may comprise any variety of epoxies, hardeners and IMR's as specified herein. Concentrations for individual constituents are provided herein. As a general guideline, based on an epoxy concentration of 100 parts per hundred, the IMR concentration may range from 0.5 to 10 parts per hundred, preferably 0.5 to 2.5 parts per hundred, and more preferably 0.5 to 2 parts per hundred. On the same basis, the hardener is generally present in a concentration of 13 to 18 parts per hundred, and preferably about 15 to 16 parts per hundred.

### COMPOSITES

In certain embodiments, the curable epoxy resin composition is cured in the presence of reinforcing fibers to form a fiber-reinforced composite. The reinforcing fibers are thermally stable and have a high melting temperature, such that the reinforcing fibers do not degrade or melt during the curing process. Suitable fiber materials include, for example, glass, quartz, polyamide resins, boron, carbon, wheat straw, hemp, sisal, cotton, bamboo and gel-spun polyethylene fibers.

The reinforcing fibers can be provided in the form of short (0.5 to 15 cm) fibers, long (greater than 15 cm) fibers or continuous rovings. The fibers can be provided in the form of a mat or other preform if desired; such mats or performs may in some embodiments be formed by entangling, weaving, stitching the fibers, or by binding the fibers together using an adhesive binder. Preforms may approximate the size and shape of the finished composite article (or portion thereof that requires reinforcement). Mats of continuous or shorter fibers can be stacked and pressed together, typically with the aid of a tackifier, to form preforms of various thicknesses, if required.

Suitable tackifiers for preparing performs (from either continuous or shorter fibers) include heat-softenable polymers such as described, for example, in U. S. Patent Nos. 4,992,228, 5,080,851 and 5,698,318. The tackifier should be compatible with and/or react with the polymer phase of the composite, so that there is good adhesion between the polymer and reinforcing fibers. A heat-softenable epoxy resin or mixture thereof with a hardener, as described in U. S. Patent No. 5,698,318, is especially suitable. The tackifier may contain other components, such as one or more catalysts, a thermoplastic polymer, a rubber, or other modifiers.

A sizing or other useful coating may be applied onto the surface of the fibers before they are contacted with the curable epoxy resin composition and formed into a composite. A sizing often promotes adhesion between the cured epoxy resin and the fiber surfaces. The sizing in some embodiments may also have a catalytic effect on the reaction between the epoxy resin and the hardener.

Fiber-reinforced composites are in general made in accordance with the invention by mixing the epoxy resin mixture with the hardener to form a curable epoxy resin composition, wetting the fibers with the curable epoxy resin composition, and then curing the composition in the presence of the reinforcing fibers. It is also possible to first wet the reinforcing fibers with either the epoxy resin mixture or the hardener (such as by dispersing the fibers into them) and then mixing the epoxy resin mixture with the hardener in the presence of the fibers. Another alternative is to apply the epoxy resin mixture and the hardener simultaneously to the reinforcing fibers and mix them in the presence of the reinforcing fibers.

The curing step may be performed in a mold. In such a case, the reinforcing fibers may be introduced into the mold before the curable epoxy resin composition. This is normally the case when a fiber preform is used. The fiber preform is placed into the mold and the curable epoxy resin composition is then injected into the closed mold, where it penetrates between the fibers in the preform and then cures to form a composite product.

Alternatively, the fibers (including a preform) can be deposited into an open mold, and the curable epoxy resin composition can be sprayed or injected onto the preform and into the mold. After the mold is filled in this manner, the mold is closed and the curable epoxy resin composition cured. In another alternative process, the curable epoxy resin composition can be applied to the fibers prior to introducing the fibers into the mold, typically by mixing the epoxy resin composition the hardener and applying (such as by spraying) the resulting curable epoxy resin composition onto the fibers. The wetted fibers are then transferred into a mold and cured.

Short fibers can be injected into the mold with the hot curable epoxy resin composition. Such short fibers may be, for example, blended with the epoxy resin or hardener (or both), prior to forming the curable epoxy resin composition. Alternatively, the short fibers may be added into the curable epoxy resin composition at the same time as the epoxy and hardener are mixed, or afterward but prior to introducing the hot curable epoxy resin composition into the mold.

Alternatively, short fibers can be sprayed into a mold. In such cases, the curable epoxy resin composition can also be sprayed into the mold, at the same time or after the short fibers are sprayed in. When the fibers and curable epoxy resin composition are sprayed simultaneously, they can be mixed together prior to spraying. Alternatively, the fibers and curable epoxy resin composition can be sprayed into the mold separately but simultaneously. In a process of particular interest, long fibers are chopped into short lengths and the chopped fibers are sprayed into the mold, at the same time as or immediately before the hot curable epoxy resin composition is sprayed.

Composites made in accordance with the invention may have fiber contents of at least 10 volume percent, preferably at least 25 volume percent or at least 35 volume percent, up to 80 volume percent, preferably up to 70 volume percent, more preferably up to 60 volume percent. The composites may have a void volume of 10% or less, 5% or less or 2% or less.

The mold may contain, in addition to or instead of the reinforcing fibers, one or more inserts. Such inserts may function as reinforcements, and in some cases may be present for weight reduction purposes. Examples of such inserts include, for example, wood, plywood, metals, various polymeric materials, which may be foamed or unfoamed, such as polyethylene, polypropylene, another polyolefin, a polyurethane, polystyrene, a polyamide, a polyimide, a polyester, polyvinylchloride and the like, various types of composite materials, and the like, that do not become distorted or degraded at the temperatures encountered during the molding step.

The mold and the preform (and the insert, if any) may be heated to the curing temperature or some other useful elevated temperature prior to contacting them with the curable epoxy resin composition. The mold surface may be treated with an external mold release agent, which may be solvent or water-based.

The particular equipment that is used to mix the components of the curable epoxy resin composition and transfer the composition to the mold is not considered to be critical to the invention, provided the curable epoxy resin composition can be transferred to the mold before it attains a high viscosity or develops significant amounts of gels.

The process of the invention is amenable to resin transfer molding (RTM), vacuum assisted resin transfer molding (VART), resin film infusion (RFI), Seemans Composites Resin Infusion Molding Process (SCRIMP) and liquid compression molding (LCM) processing methods and equipment, as well as to other methods.

The mixing apparatus can be of any type that can produce a homogeneous mixture of the epoxy resin mixture and hardener (and any optional components that are also mixed in at this time). Mechanical mixers and stirrers of various types may be used. In some embodiments, the mixing and dispensing apparatus includes an impingement mixer. The epoxy resin and hardener (and other components which are mixed in at this time) are pumped under pressure into a mixing head where they are rapidly mixed together. The resulting curable epoxy resin composition is then preferably passed through a static mixing device to provide further additional mixing, and then dispensed.

The mold is typically a metal mold, but it may be ceramic or a polymer composite, provided that the mold is capable of withstanding the pressure and temperature conditions of the molding process. The mold may contain one or more inlets, in liquid communication with the mixer(s), through which the curable epoxy resin composition is introduced. The mold may contain vents to allow gases to escape as the curable epoxy resin composition is injected.

The mold is typically held in a press or other apparatus which allows it to be opened and closed, and which can apply pressure on the mold to keep it closed during the filling and curing operations. The mold or press is provided with means by which heat or cooling can be provided.

An advantage of this invention is that the alkoxylated hydrophobe can be premixed with the epoxy resin and stored as a mixture, even at elevated temperatures, prior to being mixed with the hardener and cured. This has the dual advantages of eliminating the problem of accurately dosing the internal mold release agent (as the dosage is set beforehand when the alkoxylated hydrophobe and epoxy resin are mixed) and of avoiding the stability problems seen with other internal mold release agents. Lack of uniform mixing of the IMR in the composite result in a reduction of homogeneous material/composite properties. Higher or lower IMR levels can affect thermomechanical properties. If lower levels of IMR are experienced in certain regions of the part particularly for complex parts, this can cause demold issues.

Therefore, the invention is of particular importance in a process in which the alkoxylated hydrophobe and epoxy resin are blended to form an epoxy resin mixture which is stored at an elevated temperature, such as from 50 to 100°C, for a period of at least 1 day, in some embodiments at least 2 days, at least 3 days or at least 8 days, to 20 days or more, prior to being mixed with the hardener and cured. For example, the epoxy resin mixture may be stored in a storage tank or other apparatus, optionally with a recirculation of the epoxy resin mixture, for a time period as just indicated. The storage tank or other apparatus may hold enough of the epoxy resin mixture for two or more days production, and/or hold the epoxy resin mixture during periods of inactivity (such as, for example, weekends, holidays or other work stoppages), while maintaining the epoxy resin mixture at the aforementioned elevated temperatures. Under such circumstances, the residence time of at least a portion of the epoxy resin mixture at the elevated temperature may range for several days as mentioned above, before being combined with a hardener and cured. Specifically, depending on storage volume, the residence time of the epoxy resin of the invention may range up to 5 days, preferably at least about 10 days, and more preferably at least about 20 days. Cure time is generally one minute or less at temperatures ranging from 120°C to 140°C.

The epoxy resin mixture may further comprise an alkali metal, ammonium or phosphonium salt of a phosphate ester. The phosphate ester salt includes a phosphate (-OPO3) group that is bonded to an organic group. The organic group preferably contains an aromatic group such as phenyl or alkylphenyl, and/or a straight chain aliphatic hydrocarbyl group of at least 6 carbon atoms. In some embodiments, the phosphate ester salt is represented by the structure: wherein R2 and R3 are independently hydrogen or alkyl such as C1-4 alkyl preferably hydrogen, methyl or ethyl, and x is a number from 1 to about 10. Each M is alkali metal, ammonium or phosphonium, preferably alkali metal, most preferably sodium or potassium.

The process of the invention is useful to make a wide variety of composite products, including various types of automotive parts. Examples of these automotive parts include vertical and horizontal body panels, automobile and truck chassis components, and so-called "body-in-white" structural components.

### EXAMPLES

### Chemicals Description

Epoxy Resin A is a diglycidyl ether of bisphenol A, having an epoxide equivalent weight of 180 g/eq. It contains about 0.5% by weight of monohydrolyzed species.
Epoxy Resin B is a diglycidyl ether of bisphenol A, having an epoxide equivalent weight of 187 g/eq. It contains about 5% by weight of monohydrolyzed species.
Epoxy Resin C is a diglycidyl ether of bisphenol A, having an epoxide equivalent weight of 174 g/eq. It contains about 0.5% by weight of monohydrolyzed species.
Epoxy Resin D is a diglycidyl ether of bisphenol F, having an epoxide equivalent weight of 171 g/eq.
Epoxy Resin E is based on 3,4-Epoxycyclohexylmethyl (Synasia S-21, CAS 2386-87-0), having an epoxide equivalent weight of 137 g/eq.
Epoxy Resin F is based on 1, 4 cyclohexanedimethanol diglycidyl ether (CAS 14228-73-0), having an epoxide equivalent weight of 140 g/eq
Epoxy Resin G is based on 1, 4 Butanediol Diglycidyl ether (CAS 2425-79-8), having an epoxide equivalent weight of 129 g/eq.
IMR A is an ethoxylated fatty acid available commercially by E. and P. Wuertz GmbH and Co. KG as Wuertz Pat-657/BW. It contains ethoxylated fatty acids and fatty acid mono- and di-glycerides.
Hardener A is a triethylene tetraamine product containing less than 0.3 weight percent aminoethylethanolamine (TETA-E from The Dow Chemical Company) combined with triethylenediamine at a mole ratio of 10:1.

### Differential Scanning Calorimetry (DSC)

Dynamic DSC was used to determine the entitlement Tg of the formulations. In a heating ramp of 20 °C/min the samples were heated from 25-200 °C, kept isothermal at 200 °C for three minutes, cooled in a ramp of 20 °C to 25 °C, kept isothermal at 25 °C for three minutes, then heated again with a heating ramp of 20 °C to 200 °C, kept isothermal at 200 °C for 3 minutes, and cooled in a ramp of 20 °C to 25 °C. Tg onset and Tg midpoint are determined from the second heating segment.

### Stability Experiments

The stability of each epoxy resin with the internal mold release agent for the purposes of this invention is evaluated at 80 °C. The epoxy resin is premixed in 100 parts with 2 parts of internal mold release agent and placed in the oven under stirring (200 rpm) and under stagnant conditions. The samples are examined daily and the formation of particles or gel-like precipitates is noted. The formation of particles is considered an evidence of the reaction between the epoxy resin and the IMR and is used as an instability indicator in the examples that follow.

### Hot Plate Experiments

For the purposes of the release performance evaluation the epoxy resin/IMR blend (stored at 80 °C) and hardener mixture (at approximately 25 °C) are mixed in the required ratio for 30 seconds. The resulting mixture is poured onto a hot plate that is preheated to 130°C to form a disk of liquid on the surface of the plate. Time is measured from the point at which the mixture contacts the hot plate surface. The hot plate is maintained at 130°C as the mixture cures. A line is scored through the liquid disk periodically, using a pallet knife or similar blade. The release performance is assessed qualitatively and the Tg value of the obtained disk is collected and used as an indicator of the reaction between epoxy and IMR

### Reference Examples

Reference Example 1: 96 wt % Liquid Epoxy Resin; reaction product of epichiorohydrin and bisphenol A;MHR content∼5% Avg epoxide eq. wt = 187 Wag

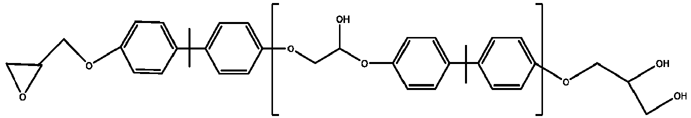

Reference Example 2: 96 wt % Liquid cycloaliphatic epoxide; low viscosity; Avg epoxide eq. wt. = 137 g/eq

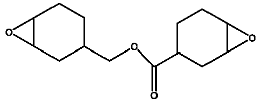

### Comparative Examples

Comparative Example 1: 96 wt % Liquid Epoxy Resin; reaction product of epichiorohydrin and bisphenol A;MHR content∼0.5% Avg epoxide eq, wt= 178 g/eq. 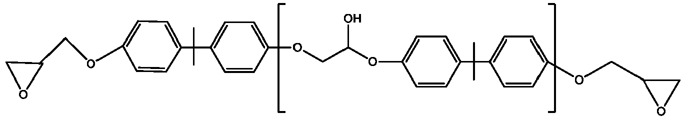
Comparative Example 2: 96 wt % Liquid Epoxy Resin; reaction product of epichiorohydrin and bisphenol A;MHR content∼5% Avg epoxide eq. wt = 187 Wag 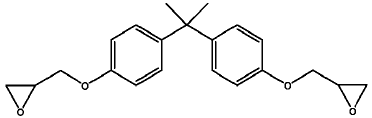
Comparative Example 3: 96 wt % Liquid Epoxy Resin; reaction product of epichiorohydrin and bisphenol F; Avg epoxide eq. wt. = 171 g/eq 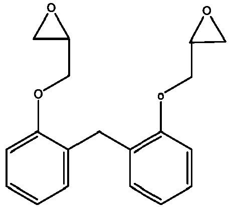
Comparative Example 4: 96 wt % 1,4-Cyclohexanedimethanol diglycidyl ether; Avg epoxide eq, wt.=140g/eq 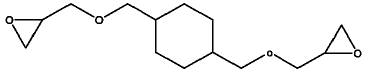
Comparative Example 5: 96 wt % Liquid aliphatic epoxy diluent; low viscosity; Avg epoxide eq. wt. =129 g/eq 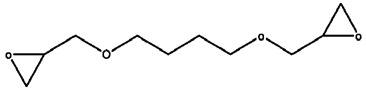
Comparative Example 6: ethoxylated fatty acid available commercially by E. and P. Wuertz GmbH and Co. KG as Wuertz Pat-657/BW. It contains ethoxylated fatty acids and fatty acid mono- and di-glycerides.

Comparative Examples 1,2,3,4,5 demonstrate the use of the IMR Pat-657/BW formulation in mixture with structurally different epoxy resins but result in the formation of visible particles after the first 24hrs, hence indicating instability of these epoxy resins with the IMR. The Reference Example 1 demonstrates the possibility to maintain an epoxy resin similar to Comparative Examples 1 and 2, based on Bisphenol A whilst significantly improving the time length of stability with the IMR formulation up to 20 days. More specifically, when comparing the stability time with IMR of the Bisphenol A resin in Comparative Example 1 with the epoxy resin described in the Reference Example significantly increased stability time is achieved. The extended stability time of this resin with IMR can be attributed to the higher MHR level. Reference Example 2 demonstrates the use of an epoxy resin that is remarkably stable with the IMR for 20 days due to superior inherent stability afforded by the cycloaliphatic structure. This resin is known in the literature to be slowly reactive towards OH functionalities at moderate temperatures, nevertheless its stability with mold release formulations is not known.

After 24 hours of mixing the epoxy resin of Reference Example 1 with the IMR at T=80 °C, no visible particles are observed. Whereas for the epoxy resin of the Comparative Example 1 after mixing it with the IMR at T= 80 °C, clusters of particles are observed in the first 24 hrs.

In Tables 1 and 2, results are reported from Reference Example 1 and Comparative Example 1.

**TABLE 1**

| | | Comp Ex 1 | Ref Ex 1 |
|---|---|---|---|
| A-Component | Description | wt% | wt% |
| Comparative Ex. 1 Resin A | | 96 | |
| Reference Ex. 1 Resin B | | | 96 |
| Wuertz - PAT 657 | | 4 | 4 |
| B-Component | Description | wt% | wt% |
| Hardener A | triethylene tetraamine product containing less than 0.3 weight percent aminoethylethanolamine (TETA-E from The Dow Chemical Company) is combined with triethylenediamine at a mole ratio of 10:1. | | |
| A:B Ratio | | 100: 16.2 | 100 14,1 |
| | | | |
| | Results | | |
| | Storage - 0 days | | |
| | Release | very good | very good |
| | Tg(°C) | 122 | 124 |
| | Storage - 1 day. | | |
| | Release | fair | very good |
| | ΔTg(°C) | 3 | 0 |
| | Storage - 8 days | | |
| | Release | poor | good |
| | ΔTg(°C) | 3 | 1 |
| | Storage-12 days | | |
| | Release | poor | good |
| | ΔTg(°C) | 3 | 2 |
| | Storage - 22 days | | |
| | Release | poor | good |
| | ΔTg(°C) | 9 | 4 |

**TABLE 2**

| Storage T = 80°C | Storage Duration (Days) | | | | | | | | | |
|---|---|---|---|---|---|---|---|---|---|---|
| | 0 | | 1 | | 8 | | 12 | | 22 | |
| MIX - ratio (100:2) | Release | T (°C) | Release | ΔT (°C) | Release | ΔT (°C) | Release | ΔT (°C) | Release | ΔT (°C) |
| Comparative Ex. 1 (PAT/657/B W + Resin A) | VERY GOOD | 122 | FAIR | 3 | POOR | 3 | POOR | 3 | POOR | 9 |
| Reference Ex. 1 (PAT/657/B W + Resin B) | VERY GOOD | 124 | VERY GOOD | 0 | GOOD | 1 | GOOD | 2 | GOOD | 4 |

Reference Example 1 is different to that described in the Comparative Example 1. The epoxy resin that is used in the Reference Example is a Bisphenol A Diglycidyl ether and is differentiated by the one used in the Comparative Example on the content of monohydrolyzed resins (MHR). In particular, stability of the epoxy resin with the internal mold release formulation at Th=80 °C under stagnant and stirring conditions is accomplished by the epoxy resin that is used in the Reference Example which contains 5% of MHR (DER 331). The MHR content of the epoxy resin is greater than the respective one of the Comparative Example thus enabling the reference system to display lower reactivity towards the IMR and a remarkable stability of 20 days mixed and stored with the IMR

Supportive to the stability and the lower reactivity of the Reference Example 1 are the T_{g} values acquired after having reacted the aged combined systems of epoxy resin and IMR for different segments of time with the hardener. Comparing the T_{g} drop of the reference system to the one of the Comparative Example 1, we demonstrate that the values of the drop are greater for the comparative system 1. In fact, after 22 days the T_{g} has dropped 9°C for the comparative system whereas only 4 for the reference system indicating the greater stability and lower reactivity afforded by the epoxy resin utilized in the Reference system. Furthermore, the release from the mold of the reference system is demonstrated to be effective after storage of the epoxy resin and the IMR for longer periods of time.

## Claims

1. An epoxy resin composition comprising:
a. an epoxy functionalized resin;
b. a hardener; and
c. an internal mold release agent, wherein said epoxy functionalized resin has a monohydrolyzed resin content of at least 10 wt%, wherein monohydrolyzed resin species are α-glycol compounds formed by the addition of a molecule of water to an epoxide group, and said internal mold release agent comprises a fatty acid ethoxylate.

2. The composition of claim 1, wherein said fatty acid ethoxylate has a fatty acid chain length ranging from 5 carbon atoms to 50 carbon atoms.

3. The composition of claim 1, wherein said fatty acid ethoxylate has at least 80 moles of ethoxylation.

4. The composition of claim 1, wherein said fatty acid ethoxylate comprises from 1 moles to 35 moles of ethoxylation.

5. The composition of claim 1, wherein said fatty acid ethoxylate comprises from 5 moles to 25 moles of ethoxylation.

6. The composition of claim 1, wherein said epoxy functionalized resin in present in a concentration ranging from 50 wt % to 99.9 wt % and said fatty acid ethoxylate is present in a concentration ranging from 0.1 wt % to 50 wt %.

7. The composition of claim 6, wherein said fatty acid ethoxylate has a fatty acid chain length ranging from 1 carbon atom to 100 carbon atoms.

8. The composition of claim 6, wherein said fatty acid ethoxylate comprises from 1 moles to 70 moles of ethoxylation.

## Patentansprüche

1. Eine Epoxidharzzusammensetzung, die Folgendes beinhaltet:
a. ein epoxidfunktionalisiertes Harz;
b. ein Härtungsmittel; und
c. ein Innenformtrennmittel, wobei das epoxidfunktionalisierte Harz einen Gehalt an monohydrolysiertem Harz von mindestens 10 Gew.-% aufweist, wobei monohydrolysierte Harzspezies α-Glycol-Verbindungen sind, die durch die Zugabe eines Wassermoleküls zu einer Epoxidgruppe gebildet werden, und das Innenformtrennmittel ein Fettsäureethoxylat beinhaltet.

2. Zusammensetzung gemäß Anspruch 1, wobei das Fettsäureethoxylat eine Fettsäurekettenlänge im Bereich von 5 Kohlenstoffatomen bis 50 Kohlenstoffatomen aufweist.

3. Zusammensetzung gemäß Anspruch 1, wobei das Fettsäureethoxylat mindestens 80 Mol an Ethoxylierung aufweist.

4. Zusammensetzung gemäß Anspruch 1, wobei das Fettsäureethoxylat 1 Mol bis 35 Mol an Ethoxylierung beinhaltet.

5. Zusammensetzung gemäß Anspruch 1, wobei das Fettsäureethoxylat 5 Mol bis 25 Mol an Ethoxylierung beinhaltet.

6. Zusammensetzung gemäß Anspruch 1, wobei das epoxidfunktionalisierte Harz in einer Konzentration im Bereich von 50 Gew.-% bis 99,9 Gew.-% vorhanden ist und das Fettsäureethoxylat in einer Konzentration im Bereich von 0,1 Gew.-% bis 50 Gew.-% vorhanden ist.

7. Zusammensetzung gemäß Anspruch 6, wobei das Fettsäureethoxylat eine Fettsäurekettenlänge im Bereich von 1 Kohlenstoffatom bis 100 Kohlenstoffatomen aufweist.

8. Zusammensetzung gemäß Anspruch 6, wobei das Fettsäureethoxylat 1 Mol bis 70 Mol an Ethoxylierung beinhaltet.

## Revendications

1. Une composition de résine époxy comprenant :
a. une résine à fonctionnalité époxy ;
b. un durcisseur ; et
c. un agent de démoulage interne, où ladite résine à fonctionnalité époxy a une teneur en résine monohydrolysée d'au moins 10 % en poids, où les espèces de résine monohydrolysée sont des composés α-glycols formés par l'ajout d'une molécule d'eau à un groupe époxyde, et ledit agent de démoulage interne comprend un éthoxylate d'acide gras.

2. La composition de la revendication 1, où ledit éthoxylate d'acide gras a une longueur de chaîne d'acide gras dans un intervalle allant de 5 atomes de carbone à 50 atomes de carbone.

3. La composition de la revendication 1, où ledit éthoxylate d'acide gras a au moins 80 moles d'éthoxylation.

4. La composition de la revendication 1, où ledit éthoxylate d'acide gras comprend de 1 mole à 35 moles d'éthoxylation.

5. La composition de la revendication 1, où ledit éthoxylate d'acide gras comprend de 5 moles à 25 moles d'éthoxylation.

6. La composition de la revendication 1, où ladite résine à fonctionnalité époxy est présente dans une concentration dans un intervalle allant de 50 % en poids à 99,9 % en poids et ledit éthoxylate d'acide gras est présent dans une concentration dans un intervalle allant de 0,1 % en poids à 50 % en poids.

7. La composition de la revendication 6, où ledit éthoxylate d'acide gras a une longueur de chaîne d'acide gras dans un intervalle allant de 1 atome de carbone à 100 atomes de carbone.

8. La composition de la revendication 6, où ledit éthoxylate d'acide gras comprend de 1 mole à 70 moles d'éthoxylation.
